Europäisches Patentamt

European Patent Office

Office européen des brevets

(19)

(11) Veröffentlichungsnummer: **0 219 665 B1**

# (12) EUROPÄISCHE PATENTSCHRIFT

(45) Veröffentlichungstag der Patentschrift: 04.09.91  (51) Int. Cl.5: **G08G 1/09**

(21) Anmeldenummer: **86112288.5**

(22) Anmeldetag: **05.09.86**

(54) Audiogerätekombination für ein Kraftfahrzeug.

(30) Priorität: 18.10.85 DE 3537078
25.07.86 DE 3625153

(43) Veröffentlichungstag der Anmeldung:
29.04.87 Patentblatt 87/18

(45) Bekanntmachung des Hinweises auf die
Patenterteilung:
04.09.91 Patentblatt 91/36

(84) Benannte Vertragsstaaten:
CH DE FR IT LI

(56) Entgegenhaltungen:
EP-A- 0 069 213
DE-A- 2 910 073
DE-A- 3 310 792

FUNKSCHAU, Heft 3, 1985, Seite 8, München,
DE: "Auto CD-Spieler im Handel"

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Glaab, Arnold, Dr.
Wilhelm-Raabe-Strasse 27
W-8510 Fürth(DE)**
Erfinder: **Fischelmayer, Heinrich
Siebenbürgener Strasse 13
W-8502 Zirndorf(DE)**

## Beschreibung

Die Erfindung betrifft eine Audiogerätekombination für ein Kraftfahrzeug, bestehend aus einem Autoradio mit Programmstummschaltung und Verkehrsfunkerkennung, einer separaten hochwertigen Signalquelle, insbesondere einem CD-Spieler, und einem separaten hochwertigen NF-Verstärker, dem die zu verstärkenden NF-Signale über eine Umschalteinrichtung wahlweise zugeführt werden.

Hochwertige Signalquellen, insbesondere CD-Spieler, finden auch in Kraftfahrzeugen zunehmend Anwendung. Aus der Zeitschrift "Funkschau", 1985, Heft 3, Seite 8, ist ein sogenanntes "CD-Audioset" für den Einsatz in Kraftfahrzeugen bekannt. Es besteht aus einem Steuergerät, einem CD-Spieler und einem separaten Endverstärker. Das speziell hierfür konzipierte Steuergerät, als Tuner-Cassettenspieler-Kombination ausgelegt, enthält eine aufwendige Elektronik zur Erzeugung von Steuer- und Schaltsignalen, die das automatische Einblenden von Verkehrsdurchsagen bei CD-Betrieb sowie die Steuerung der Laufwerkfunktionen des CD-Spielers beim Einblenden von Verkehrsdurchsagen bzw. beim Umschalten auf Radio oder Cassette ermöglichen.

Der Nachteil der bekannten Gerätekombination liegt im wesentlichen darin, daß anstelle eines herkömmlichen Autoradios ein ganz spezielles Steuergerät erforderlich ist, dessen kostenmäßiger und technischer Aufwand wegen der zusätzlichen Elektronik für die Signalquellenumschaltung und die Erzeugung von Steuerund Schaltsignalen hoch ist. Für den Verbraucher ergibt sich außerdem der Nachteil, daß er hinsichtlich des im Steuergerät enthaltenen Rundfunk- und/oder Cassettenteils kaum Auswahlmöglichkeiten hat, da das Angebot solcher Steuergeräte aufgrund des hohen Preises und der damit verbundenen begrenzten Nachfrage nur auf sehr wenige Modelle beschränkt sein wird.

Der Erfindung liegt die Aufgabe zugrunde, eine Audiogerätekombination der im Oberbegriff des Anspruchs 1 angegebenen Art mit einfachen technischen Mitteln so auszubilden, daß jedes herkömmliche Autoradio mit Programmstummschaltung und Verkehrsfunkerkennung als Steuergerät für die in der Gerätekombination zu betreibende hochwertige Signalquelle benutzt werden kann. Hierbei soll es insbesondere möglich sein, Verkehrsdurchsagen während des Betriebes der Signalquelle automatisch einzublenden bzw. Laufwerkfunktionen der Signalquelle beim Einblenden von Verkehrsdurchsagen oder beim Umschalten auf Rundfunkbetrieb geeignet zu steuern.

Diese Aufgabe wird gemäß der Erfindung durch die im Kennzeichen des Anspruchs 1 oder 2 angegebenen Merkmale gelöst. Vorteilhafte Weiterbildungen der Erfindung sind in den Unteransprüchen gekennzeichnet.

Bei der Audiogerätekombination gemäß der Erfindung ist die Umschalteinrichtung für die wahlweise zu verstärkenden NF-Signale in vorteilhafter Weise in der hochwertigen Signalquelle angeordnet. Sie wird von einem Schwellwertschalter, der den Pegel des an die Umschalteinrichtung gelegten NE-Ausgangs des Autoradios überwacht und gegebenenfalls einer Kontrolleinrichtung, die die Betriebsbereitschaft der Signalquelle überwacht, gesteuert. Ein Durchschalten des NF-Signals der hochwertigen Signalquelle an den NF-Verstärker erfolgt nur dann, wenn der Schwellwertschalter während einer bestimmten Zeitspanne kein vom NF-Ausgang des Autoradios kommendes und eine vorgegebene Rauschschwelle überschreitendes Signal detektiert und die gegebenenfalls vorhandene Kontrolleinrichtung den Bereitschaftszustand der Signalquelle feststellt.

Die Erfindung ist im folgenden anhand von Zeichnungen näher erläutert. Es zeigen:

Fig. 1 ein erstes Ausführungsbeispiel einer Audiogerätekombination gemäß der Erfindung,

Fig. 2 ein zweites Ausführungsbeispiel einer Audiogerätekombination gemäß der Erfindung.

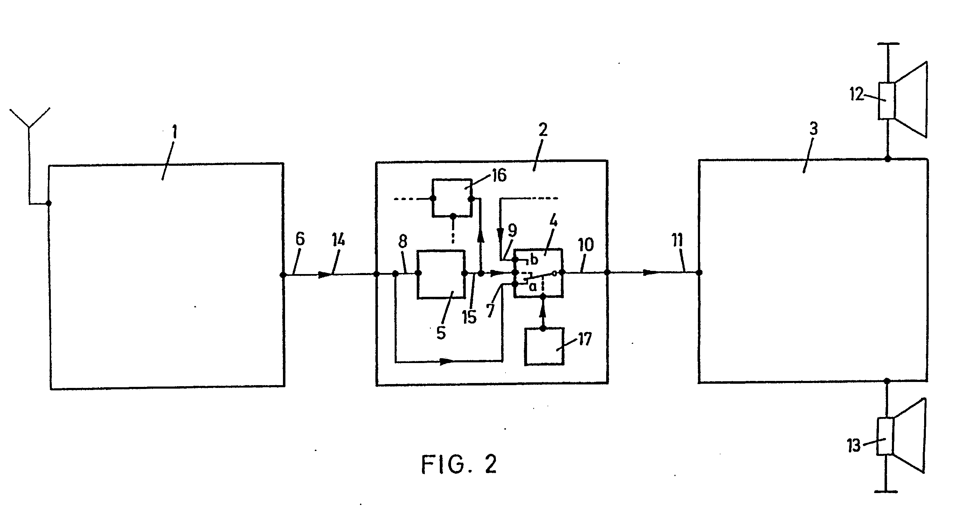

Die dargestellten Geräteanordnungen bestehen jeweils aus einem Autoradio 1, einem CD-Spieler 2 (hochwertige Signalquelle) und einem hochwertigen NF-Verstärker 3. Hierbei ist das vom NF-Ausgang 6 des Autoradios abnehmbare Signal über eine Verbindung 14 an den ersten Eingang 7 einer im CD-Spieler 2 angeordneten Umschalteinrichtung 4 sowie an den Eingang 8 eines ebenfalls im CD-Spieler 2 angeordneten Schwellwertschalters 5 gelegt. Das zu verstärkende NF-Signal des CD-Spielers liegt an einem zweiten Eingang 9 der Umschalteinrichtung 4. Zur Steuerung des Schaltvorganges ist die Umschalteinrichtung 4 mit einem Steuerausgang 15 des Schwellwertschalters 5 verbunden. Beim Ausführungsbeispiel nach Fig. 2 steht die Umschalteinrichtung 4 ferner mit einer Kontrolleinrichtung 17 in Verbindung. An den Steuerausgang 15 ist jeweils noch eine Einrichtung 16 des CD-Spielers angeschlossen, die die Betriebsfunktionen "Start", "Stop" und "Bereitschaft" steuert. Der Signalausgang 10 der Umschalteinrichtung 4 ist mit dem Signaleingang 11 des hochwertigen NF-Verstärkers 3 verbunden.

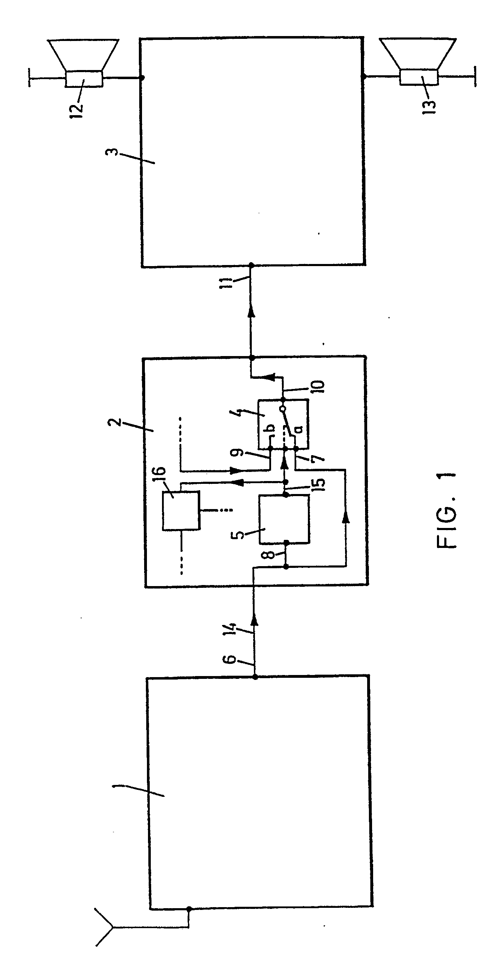

Für den Fall, daß die Schwellwertschaltung 5 der Audiogerätekombination nach Fig. 1 an ihrem Eingang 8 einen eine vorgegebene Rauschschwelle überschreitenden NF-Pegel detektiert, also bei Rundfunkempfang bzw. bei stummgeschaltetem Programm und Eintreffen einer Verkehrsdurchsage, wird über den Steuerausgang 15 ein erstes Schaltsignal abgegeben, das die Umschalteinrichtung 4 in die Schaltstellung a bringt. Bei dieser Schaltstellung wird das NF-Signal des Autoradios 1 durch den CD-Spieler 2 an den NF-Verstärker 3 durchgeschleift. Ferner wird die Einrichtung 16 durch das gleiche Schaltsignal so angesteuert, daß der Betrieb des CD-Spielers blockiert oder in eine Pausenstellung gebracht wird. Bleibt dagegen am Eingang 8 der Schwellwertschaltung 5 ein zu verstärkendes Rundfunksignal aus, so daß am Eingang 8 entweder überhaupt kein Signalpegel - Autoradio außer Betrieb - oder lediglich ein von nicht ausgesteuerten Verstärkerstufen herrührendes, jedoch unterhalb der vorgegebenen Rauschschwelle liegendes Grundrauschen - Autoradio in Betrieb bei stummgeschaltetem Programm - vorhanden ist, dann wird am Steuerausgang 15 ein zweites Schaltsignal erzeugt, das die Umschalteinrichtung 4 in die Schaltstellung b bringt und über die Einrichtung 16 den Betrieb des CD-Spielers freigibt. Dieser kann somit bei Bedarf gestartet werden. Falls das Autoradio in Betrieb und das Programm stummgeschaltet ist, erscheint beim Eintreffen einer Verkehrsdurchsage am NF-Ausgang 6 des Autoradios 1 jedoch sofort ein die vorgegebene Rauschschwelle überschreitendes Signal, das von dem Schwellwertschalter 5 detektiert und über die Umschalteinrichtung 4 an den NF-Verstärker 3 durchgeschaltet wird. Der CD-Spieler wird, falls er vorher in Betrieb war, gestoppt und die CD in Bereitschaftsstellung ausgefahren. Nach Beendigung der Verkehrsdurchsage, also beim Ausbleiben eines entsprechenden Signalpegels am Eingang 8 des Schwellwertschalters 5, wird die CD wieder gestartet.

Auch bei dem Ausführungsbeispiel gemäß Fig. 2 wird für den Fall, daß die Schwellwertschaltung 5 an ihrem Eingang 8 einen eine vorgegebene Rauschschwelle überschreitenden NF-Pegel detektiert, also bei Rundfunkempfang bzw. bei stummgeschaltetem Programm und Eintreffen einer Verkehrsdurchsage, über den Steuerausgang 15 ein erstes Schaltsignal abgegeben, das die Umschalteinrichtung 4 in die Schaltstellung a bringt. Bei dieser Schaltstellung wird das NF-Signal des Autoradios 1 durch den CD-Spieler 2 an den NF-Verstärker 3 durchgeschleift. Ferner wird die Einrichtung 16 durch das gleiche Schaltsignal so angesteuert, daß der Betrieb des CD-Spielers blockiert oder - falls dieser bereits aktiv ist - in eine Pausenstellung gebracht wird.

Bleibt dagegen am Eingang 8 der Schwellwertschaltung 5 für eine bestimmte Zeitspanne ein zu verstärkendes Rundfunksignal aus und ist ferner der CD-Spieler im Bereitschaftszustand, was bei dieser Anordnung zusätzlich durch die Kontrolleinrichtung 17 überwacht wird, dann erfolgt eine Umschaltung in die Schaltstellung b. Über die Einrichtung 16 wird dann der Betrieb des CD-Spielers freigegeben und die CD für die Wiedergabe gestartet. Befindet sich der CD-Spieler nicht im Bereitschaftszustand, dann wird die Umschalteinrichtung 4 auch bei Ausbleiben eines Rundfunksignals nicht in die Schaltstellung b gebracht. Hierdurch wird vermieden, daß beim Auftreten von kurzeitigen Pausen im wiederzugebenden Sprachsignal des Autoradios auch dann eine Umschaltung auf die hochwertige Signalquelle erfolgt, wenn diese möglicherweise überhaupt nicht in Betriebsbereitschaft geschaltet ist.

Den Bereitschaftszustand des CD-Spielers 2 stellt die Kontrolleinrichtung 17 vorzugsweise über ein dem CD-Spieler entnehmbares Steuersignal fest. Steht ein derartiges Signal nicht zur Verfügung, dann besteht eine weitere vorteilhafte Möglichkeit, den Bereitschaftszustand des CD-Spielers festzustellen, darin, das Auftreten einer Rauschspannung am NF-Ausgang des CD-Spielers zu überwachen. Hierzu ist es notwendig, daß die Kontrolleinrichtung 17 eine Verstärkerschaltung mit entsprechender Empfindlichkeit aufweist.

## Patentansprüche

1. Audiogerätekombination für ein Kraftfahrzeug, bestehend aus einem Autoradio mit Programmstummschaltung und Verkehrsfunkerkennung, einer separaten hochwertigen Signalquelle, insbesondere einem CD-Spieler, und einem separaten hochwertigen NF-Verstärker, dem die zu verstärkenden NF-Signale über eine Umschalteinrichtung wahlweise zugeführt werden, **dadurch gekennzeichnet,** daß die Umschalteinrichtung (4) in der hochwertigen Signalquelle (2) angeordnet ist und von einem Schwellwertschalter (5) gesteuert wird, der den Pegel des an die Umschalteinrichtung (4) gelegten NF-Ausgangs (6) des Autoradios (1) überwacht und das Durchschalten des NF-Signals (9) der hochwertigen Signalquelle (2) an den NF-Verstärker (3) nur dann zuläßt, wenn er kein vom NF-Ausgang (6) des Autoradios (1) kommendes und eine vorgegebene Rauschschwelle überschreitendes Signal detektiert.

2. Audiogerätekombination für ein Kraftfahrzeug, bestehend aus einem Autoradio mit Programmstummschaltung und Verkehrsfunkerkennung, einer separaten hochwertigen Signalquelle, insbesondere einem CD-Spieler, und einem separaten hochwertigen NF-Verstärker, dem die zu verstärkenden NF-Signale über eine Umschalteinrichtung wahlweise zugeführt werden, dadurch gekennzeichnet, daß die Umschalteinrichtung (4) in der hochwertigen Signalquelle (2) angeordnet ist und von einem Schwellwertschalter (5), der den Pegel des an die Umschalteinrichtung (4) gelegten NF-Ausgangs (6) des Autoradios (1) überwacht, und einer Kontrolleinrichtung (17), die die Betriebsbereitschaft der Signalquelle (2) überwacht, gesteuert wird, und daß das NF-Signal (9) der Signalquelle (2) an den NF-Verstärker (3) nur dann durchgeschaltet wird, wenn zum einen der Schwellwertschalter (5) während einer bestimmten Zeitspanne kein vom NF-Ausgang (6) des Autoradios (1) kommendes und eine vorgegebene Rauschschwelle überschreitendes Signal detektiert und zum anderen die Kontrolleinrichtung (17) den Bereitschaftszustand der Signalquelle (2) feststellt.

3. Audiogerätekombination nach Anspruch 2, dadurch gekennzeichnet, daß die Kontrolleinrichtung (17) den Bereitschaftszustand der Signalquelle (2) über ein der Signalquelle entnehmbares Steuersignal feststellt.

4. Audiogerätekombination nach Anspruch 2, dadurch gekennzeichnet, daß die Kontrolleinrichtung (17) eine empfindliche Verstärkerschaltung aufweist, die den bestehenden oder nicht bestehenden Bereitschaftszustand der Signalquelle 2 über eine am NF-Ausgang der Signalquelle auftretende bzw. nicht auftretende Rauschspannung feststellt.

5. Audiogerätekombination nach Anspruch 1 oder einem oder mehreren der Ansprüche 2 bis 4, dadurch gekennzeichnet, daß bei jedem Durchschalten eines vom Autoradio (1) kommenden NF-Signals an den NF-Verstärker (3) der Betrieb der hochwertigen Signalquelle (2) über eine vom Schwellwertschalter (5) gesteuerte Einrichtung (16) blockiert oder in eine Pausenstellung gebracht wird.

**Claims**

1. Audio equipment combination for a motor vehicle, consisting of a car radio with programme muting and traffic programme detection, a separate high-quality signal source, particularly a CD player, and a separate high-quality AF amplifier which is optionally supplied via a change-over device with the AF signals to be amplified, characterised in that the change-over device (4) is arranged in the high-quality signal source (2) and is controlled by a threshold switch (5), which monitors the level of the AF output (6) of the car radio (1) which is applied to the change-over device (4), and only allows the AF signal (9) of the high-quality signal source (2) to be switched through to the AF amplifier (3) when it does not detect a signal coming from the AF output (6) of the car radio (1) and exceeding a predetermined noise threshold.

2. Audio equipment combination for a motor vehicle, consisting of a car radio with programme muting and traffic programme detection, a separate high-quality signal source, particularly a CD player, and a separate high-quality AF amplifier, which is optionally supplied via a change-over device with the AF signals to be amplified, characterised in that the change-over device (4) is arranged in the high-quality signal source (2) and is controlled by a threshold switch (5), which monitors the level of the AF output (6) of the car radio (1) which is applied to the change-over device (4), and by a control device (17) which monitors the operational readiness of the signal source (2), and in that the AF signal (9) of the signal source (2) is only switched through to the AF amplifier (3) when, on the one hand, the threshold switch (5) does not detect a signal coming from the AF output (6) of the car radio (1) and exceeding a predetermined noise threshold during a particular time interval and, on the other hand, the control device (17) detects the state of readiness of the signal source (2).

3. Audio equipment combination according to Claim 2, characterised in that the control device (17) detects the state of readiness of the signal source (2) via a control signal which can be taken from the signal source.

4. Audio equipment combination according to Claim 2, characterised in that the control device (17) exhibits a sensitive amplifier circuit which detects the existing or not existing state of readiness of the signal source (2) via a noise voltage occurring or not occurring at the AF output of the signal source.

5. Audio equipment combination according to Claim 1 or one or more of Claims 2 to 4, characterised in that the operation of the high-quality signal source (2) is blocked or brought into a pause position via a device (16) controlled by the threshold switch (5) with each switching-through of an AF signal coming from the car radio (1) to the AF amplifier (3).

**Revendications**

1. Ensemble combiné audio pour un véhicule automobile, composé d'un auto-radio avec commutation en coupure de programme et reconnaissance d'émissions radio destinées à la circulation, d'une source séparée de signaux de haute qualité, notamment un lecteur de disques compacts, et d'un amplificateur BF séparé de haute qualité auquel on envoie, de manière sélective, les signaux BF à amplifier au moyen d'un dispositif de commutation, caractérisé en ce que le dispositif de commutation (4) est incorporé à la source de signaux de haute qualité (2) et est commandé par un commutateur à seuil (5), qui surveille le niveau de la sortie BF (6) de l'auto-radio (1) appliquée au dispositif de commutation (4) et n'autorise la transmission du signal BF (9) de la source de haute qualité (2) vers l'amplificateur BF (3) que lorsqu'il ne détecte aucun signal en provenance de la sortie BF (6) de l'auto-radio (1) et qu'il détecte un signal dépassant un niveau de bruit prédéterminé.

2. Ensemble combiné audio pour un véhicule automobile composé d'un auto-radio avec commutation en coupure de programme et reconnaissance d'émissions radio destinées à la circulation, d'une source séparée de signaux de haute qualité, notamment un lecteur de disques compacts, et d'un amplificateur BF séparé de haute qualité auquel on envoie, de manière sélective, les signaux BF à amplifier au moyen d'un dispositif de commutation, caractérisé en ce que le dispositif de commutation (4) est incorporé à la source de signaux de haute qualité (2) et est commandé par un commutateur à seuil (5) qui surveille le niveau de la sortie BF (6) de l'auto-radio (1) appliquée au dispositif de commutation (4), et d'un dispositif de contrôle (17) qui surveille la disponibilité de la source de signaux (2), et en ce que le signal BF (9) de la source de signaux (2) est seulement connecté à l'amplificateur (3) si , d'une part, pendant une période de temps déterminée, le commutateur à seuil (5) ne détecte aucun signal provenant de la sortie BF (6) de l'auto-radio (1) et détecte un signal dépassant un seuil de bruit prédéterminé et si, d'autre part, le dispositif de contrôle (17) constate l'état de disponibilité de la source de signaux (2).

3. Ensemble combiné audio selon la revendication 2, caractérisé en ce que le dispositif de contrôle (17) constate l'état de disponibilité de la source de signaux (2) au moyen d'un signal de commande à prélever sur la source de signaux.

4. Ensemble combiné audio selon la revendication 2, caractérisé en ce que le dispositif de contrôle (17) présente un circuit d'amplification sensible qui constate l'existence ou l'inexistence de l'état de disponibilité de la source de signaux (2) d'après la présence ou l'absence d'une tension de bruit sur la sortie BF de la source de signaux.

5. Ensemble combiné audio selon la revendication 1 ou l'une ou plusieurs des revendications 2 à 4, caractérisé en ce qu'à chaque transmission à l'amplificateur BF (3) d'un signal BF provenant de l'auto-radio (1), le fonctionnement de la source de signaux de haute qualité (2) est bloqué ou amené à une position d'attente par un dispositif (16) commandé par le commutateur à seuil (5).

FIG. 1

FIG. 2